# EUROPEAN PATENT APPLICATION

(11) **EP 3 352 340 A1**
(43) Date of publication of application: **25.07.2018**
(21) Application number: 16878971.7
(22) Date of filing: 22.12.2016
(51) Int. Cl.: H02K 3/28, H02K 15/06

(54) **STATOR COIL, METHOD FOR MANUFACTURING STATOR, AND DYNAMO-ELECTRIC MACHINE**

(30) Priority: 25.12.2015 JP 2015254924
(71) Applicant: AISIN AW CO., LTD., Anjo-shi, Aichi-ken, 444-1192 (JP); Hayashikogyosyo Co., Ltd., Nakatsugawa-shi, Gifu 509-9131 (JP)
(72) Inventor: KUROYANAGI, Toru, Anjo-shi Aichi 444-1192 (JP); KAJITA, Ko, Nakatsugawa-shi Gifu 509-9131 (JP); HOBO, Takahiko, Nakatsugawa-shi Gifu 509-9131 (JP)
(74) Representative: Kramer Barske Schmidtchen Patentanwälte PartG mbB
(86) International application number: PCT/JP2016/088492
(87) International publication number: WO 2017/111085

(57) **Abstract**

This rotating electrical machine includes a coil. The coil includes a first coil portion formed of a single-layer lap winding coil arranged on radially outer sides of slots, a second coil portion continuously connected to a first connecting wire portion continuously connected to the first coil portion, and formed of a single-layer lap winding coil arranged on radially inner sides of the slots, and a third coil portion group including a plurality of third coil portions each formed of a double-layer lap winding coil.

## Description

### TECHNICAL FIELD

The present invention relates to a stator coil, a method for manufacturing a stator, and a rotating electrical machine.

### BACKGROUND ART

Hitherto, there is known a rotating electrical machine including double-layer lap winding coils, in each of which one of a pair of slot-housed portions of the coil that are arranged in slots is arranged on a radially outer side of the slot and the other of the pair of slot-housed portions is arranged on a radially inner side of the slot. Such a rotating electrical machine is disclosed in, for example, Japanese Patent Application Publication No. 2009-195004 (JP 2009-195004 A).

In the rotating electrical machine described in Japanese Patent Application Publication No. 2009-195004 (JP 2009-195004 A), the slot-housed portion of one double-layer lap winding coil out of the two double-layer lap winding coils that are arranged adjacent to each other is arranged on the radially outer side of the slot, and the slot-housed portion of the other double-layer lap winding coil is arranged on the radially inner side of the same slot as that in which the slot-housed portion of the one double-layer lap winding coil is arranged. Further, in the rotating electrical machine described in Japanese Patent Application Publication No. 2009-195004 (JP 2009-195004 A), the double-layer lap winding coils are arranged in all of the plurality of slots.

In the rotating electrical machine described in Japanese Patent Application Publication No. 2009-195004 (JP 2009-195004 A), when the double-layer lap winding coils are arranged in the slots one by one, the slot-housed portion of the double-layer lap winding coil that is first arranged and the slot-housed portion of the final double-layer lap winding coil are arranged in the same slot. Therefore, it is necessary that the slot-housed portion of the double-layer lap winding coil to be finally arranged be arranged in the slot in a state in which the slot-housed portion of the double-layer lap winding coil that is first arranged is temporarily removed from the slot, and then the slot-housed portion of the double-layer lap winding coil that is first arranged and temporarily removed from the slot be arranged in the slot again. In view of this, the following structure is conceivable. One lap winding coil that is first arranged in a stator core (slots) and another lap winding coil that is finally arranged in the stator core are structured as single-layer lap winding coils. The one single-layer lap winding coil is first arranged on deep sides of the slots, the double-layer lap winding coils are arranged in the stator core, and then, that other single-layer lap winding coil is finally arranged on shallow sides of the slots.

In the case of the structure described above, however, when the one single-layer lap winding coil arranged only on the deep sides (one of the radially outer sides and the radially inner sides) of the slots and that other single-layer lap winding coil arranged only on the shallow sides (the other of the radially outer sides and the radially inner sides) of the slots are individually connected to a power line in parallel to each other, it is conceivable that the balance of flux linkage may be poorer than that of the double-layer lap winding coil due to a difference in the radial arrangement positions of the one single-layer lap winding coil and the other single-layer lap winding coil. In this case, it is conceivable that the one single-layer lap winding coil and the other single-layer lap winding coil are routed together (routing is changed) after the one single-layer lap winding coil and that other single-layer lap winding coil are arranged in the stator core in order to prevent the deterioration of the balance of flux linkage. Thus, it is conceivable that the one single-layer lap winding coil and that other single-layer lap winding coil are structured to be connected together so as to have a balance of flux linkage similar to that of the double-layer lap winding coil.

### Related Art Documents

### Patent Documents

Patent Document 1: Japanese Patent Application Publication No. 2009-195004 (JP 2009-195004 A)

### SUMMARY OF THE INVENTION

### Problem to be Solved by the Invention

However, it is necessary to manually perform the operation of routing (or changing the routing of) the one single-layer lap winding coil and that other single-layer lap winding coil after the one single-layer lap winding coil and that other single-layer lap winding coil are arranged in the stator core. Therefore, mechanization (automation) is difficult. Further, it is necessary to secure a space for providing a connecting terminal and an insulating member in order to perform the routing (or change the routing). Therefore, there is an inconvenience of an increase in the size of the stator coil (rotating electrical machine). Thus, the stator coil having the structure described above has a problem in terms of difficulty in achieving mechanization (automation) of the operation of arranging the stator coil in the slots while the increase in the size of the stator coil (rotating electrical machine) is prevented.

The present invention has been made to solve the problem described above, and it is one object of the present invention to provide a stator coil, a method for manufacturing a stator, and a rotating electrical machine, in which an operation of arranging the stator coil in slots can be mechanized (automated) easily preventing an increase in the size of the stator coil (rotating electrical machine).

### Means for Solving the Problem

In order to achieve the object described above, a stator coil according to a first aspect of the present invention is a coil to be arranged in a stator core. The coil includes a first coil portion formed of a single-layer lap winding coil including a pair of first slot-housed portions to be respectively arranged on a radially outer side of a first slot and on a radially outer side of a second slot, a second coil portion continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of a third slot different from the first slot and the second slot, and a third coil portion group including a plurality of third coil portions each formed of a double-layer lap winding coil. A third slot-housed portion at a one-side end of the third coil portion group in a circumferential direction is arranged on a radially inner side of the second slot, and a third slot-housed portion at an other-side end of the third coil portion group in the circumferential direction is arranged on a radially outer side of the third slot.

In the stator coil according to the first aspect of the present invention, with the structure described above, for example, when the slots are open to a radially outer side of the stator core, it is possible to first arrange the second coil portion formed of the single-layer lap winding coil in the stator core in a state in which the first coil portion is retreated to the outside of the stator core (for example, a radially inner side of the stator core), arrange the third coil portion group including the plurality of third coil portions each formed of the double-layer lap winding coil in the stator core, and finally arrange, in the stator core, the first coil portion that is arranged on (retreated to) the outside of the stator core. Therefore, there is no need to temporarily remove, from the slots, a slot-housed portion of a double-layer lap winding coil that is first arranged. There is no need to route (or change the routing of) the first coil portion and the second coil portion after the first coil portion and the second coil portion are arranged in the stator core. Thus, the operation of arranging the stator coil in the slots can be mechanized (automated) easily. Further, there is no need to route (or change the routing of) the first coil portion and the second coil portion after the first coil portion and the second coil portion are arranged in the stator core. Therefore, there is no need to secure a space for providing a connecting terminal and an insulating member for performing the routing (or changing the routing). Thus, the increase in the size of the stator coil (rotating electrical machine) can be prevented. As a result, the operation of arranging the stator coil in the slots can be mechanized (automated) easily while preventing the increase in the size of the stator coil (rotating electrical machine).

A method for manufacturing a stator according to a second aspect of the present invention is a method for manufacturing a stator including a stator core having a first slot, a second slot, and a third slot that are different slots. The method includes arranging, in a state in which one of a first coil portion and a second coil portion is retreated to an outside of the stator core, the other of the first coil portion and the second coil portion in the stator core, the first coil portion being formed of a single-layer lap winding coil including a pair of first slot-housed portions to be respectively arranged on a radially outer side of the first slot and on a radially outer side of the second slot of the stator core, the second coil portion being continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of the third slot different from the first slot and the second slot, subsequently arranging, on a radially inner side of the second slot, a third slot-housed portion at a one-side end of a third coil portion group in a circumferential direction, the third coil portion group including a plurality of third coil portions each formed of a double-layer lap winding coil, and arranging, on a radially outer side of the third slot, a third slot-housed portion at an other-side end of the third coil portion group in the circumferential direction, and subsequently arranging, in the stator core, the one of the first coil portion and the second coil portion that is retreated to the outside of the stator core.

In the method for manufacturing a stator according to the second aspect of the present invention, with the structure described above, it is possible to provide a method for manufacturing a stator in which the operation of arranging the stator coil in the slots can be mechanized (automated) easily while the increase in the size of the stator coil (rotating electrical machine) is prevented.

A rotating electrical machine according to a third aspect of the present invention includes a rotor core provided with a permanent magnet, a stator core arranged so as to face the rotor core in a radial direction, and having a first slot, a second slot, and a third slot that are different slots, and a coil arranged in the stator core. The coil includes a first coil portion formed of a single-layer lap winding coil including a pair of first slot-housed portions respectively arranged on a radially outer side of the first slot and on a radially outer side of the second slot, a second coil portion continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of the third slot different from the first slot and the second slot, and a third coil portion group including a plurality of third coil portions each formed of a double-layer lap winding coil. A third slot-housed portion at a one-side end of the third coil portion group in a circumferential direction is arranged on a radially inner side of the second slot, and a third slot-housed portion at an other-side end of the third coil portion group in the circumferential direction is arranged on a radially outer side of the third slot.

In the rotating electrical machine according to the third aspect of the present invention, with the structure described above, it is possible to provide, also in the rotating electrical machine according to the third aspect, a rotating electrical machine in which the operation of arranging the stator coil in the slots can be mechanized (automated) easily while the increase in the size of the stator coil (rotating electrical machine) is prevented.

### Effects of the Invention

According to the present invention, as described above, the operation of arranging the stator coil in the slots can be mechanized (automated) easily while the increase in the size of the stator coil (rotating electrical machine) is prevented.

### BRIEF DESCRIPTION OF THE DRAWINGS

[FIG. 1] FIG. 1 is a plan view of a rotating electrical machine according to a first embodiment of the present invention.
[FIG. 2] FIG. 2 is a view illustrating a coil of the rotating electrical machine according to the first embodiment of the present invention.
[FIG. 3] FIG. 3 is a view illustrating a first coil portion and a second coil portion of the rotating electrical machine according to the first embodiment of the present invention.
[FIG. 4] FIG. 4 is a diagram for describing the lengths of a first connecting wire portion of the rotating electrical machine according to the first embodiment of the present invention.
[FIG. 5] FIG. 5 is a view illustrating a third coil portion of the rotating electrical machine according to the first embodiment of the present invention.
[FIG. 6] FIG. 6 is a view (1) for describing a method for manufacturing the third coil portion of the rotating electrical machine according to the first embodiment of the present invention.
[FIG. 7] FIG. 7 is a view (2) for describing the method for manufacturing the third coil portion of the rotating electrical machine according to the first embodiment of the present invention.
[FIG. 8] FIG. 8 is a view (3) for describing the method for manufacturing the third coil portion of the rotating electrical machine according to the first embodiment of the present invention.
[FIG. 9] FIG. 9 is a view for describing a method for manufacturing the first coil portion and the second coil portion of the rotating electrical machine according to the first embodiment of the present invention.
[FIG. 10] FIG. 10 is a view (1) for describing retreat of the first coil portion and arrangement of the second coil portion in a stator core in the rotating electrical machine according to the first embodiment of the present invention.
[FIG. 11] FIG. 11 is a view (2) for describing the retreat of the first coil portion and the arrangement of the second coil portion in the stator core in the rotating electrical machine according to the first embodiment of the present invention.
[FIG. 12] FIG. 12 is a view for describing arrangement of the third coil portion in the stator core in the rotating electrical machine according to the first embodiment of the present invention.
[FIG. 13] FIG. 13 is a view (1) for describing arrangement of the retreated first coil portion in the stator core in the rotating electrical machine according to the first embodiment of the present invention.
[FIG. 14] FIG. 14 is a view (2) for describing the arrangement of the retreated first coil portion in the stator core in the rotating electrical machine according to the first embodiment of the present invention.
[FIG. 15] FIG. 15 is a plan view of a rotating electrical machine according to a second embodiment of the present invention.
[FIG. 16] FIG. 16 is a view for describing retreat of a second coil portion and arrangement of a first coil portion and a third coil portion in a stator core in the rotating electrical machine according to the second embodiment of the present invention.
[FIG. 17] FIG. 17 is a view for describing arrangement of the retreated second coil portion in the stator core in the rotating electrical machine according to the second embodiment of the present invention.
[FIG. 18] FIG. 18 is a view illustrating an inner peripheral core of a rotating electrical machine according to a modified example of the first embodiment of the present invention.
[FIG. 19] FIG. 19 is a view for describing the arrangement of the retreated first coil portion in the stator core in the rotating electrical machine according to the modified example of the first embodiment of the present invention.

### MODES FOR CARRYING OUT THE INVENTION

Embodiments of the present invention are described below with reference to the drawings.

### [First Embodiment]

### (Structure of Rotating Electrical Machine)

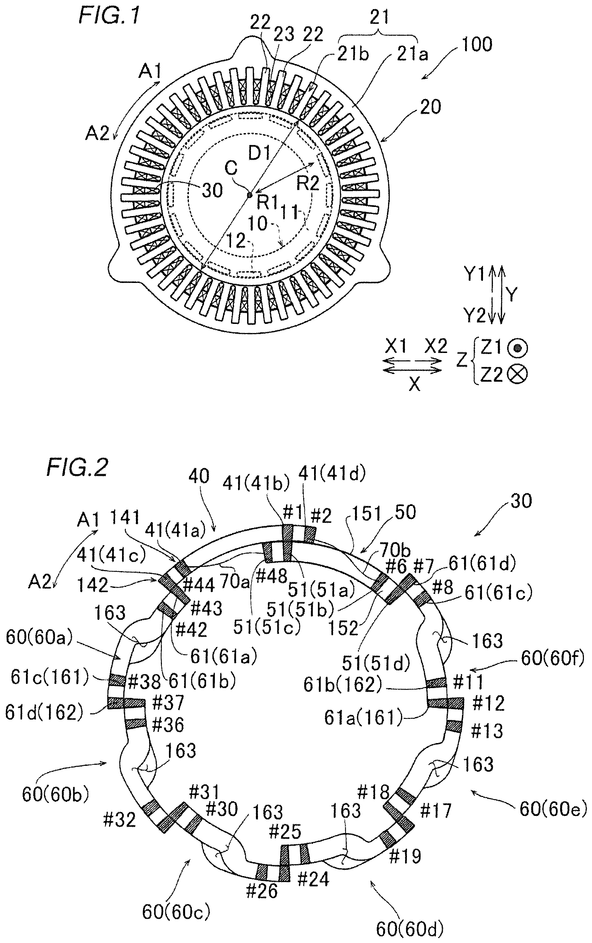

The structure of a rotating electrical machine 100 according to a first embodiment is described with reference to FIG. 1 to FIG. 5. For example, the rotating electrical machine 100 illustrated in FIG. 1 is a motor (preferably a three-phase brushless motor). FIG. 2 illustrates only a coil 30 of one phase out of coils 30 of three phases. The coil 30 is an example of a "stator coil" in the claims.

A simple phase "rotational axis direction" or "axial direction" herein refers to a rotational axis direction of the rotating electrical machine 100, which means a direction parallel to a Z-axis in the drawings. A simple phase "circumferential direction" refers to a circumferential direction of the rotating electrical machine 100, which means an arrow A1 direction or an arrow A2 direction in the drawings. A simple phase "radial direction" refers to a radial direction of the rotating electrical machine 100, which means an arrow R1 direction or an arrow R2 direction in the drawings. A simple phase "radially inner side" refers to a radially inner side of the rotating electrical machine 100, which means the arrow R1 direction side in the drawings. A simple phase "radially outer side" refers to a radially outer side of the rotating electrical machine 100, which means the arrow R2 direction side in the drawings.

As illustrated in FIG. 1, the rotating electrical machine 100 includes a rotor 10. A rotor core 11 of the rotor 10 is provided with a plurality of permanent magnets 12. The permanent magnets 12 are arranged substantially equiangularly along the circumferential direction.

The rotating electrical machine 100 includes a stator 20 (stator core 21) arranged so as to face the outer peripheral surface of the rotor core 11 in the radial direction. The stator core 21 is formed as an internal-external divisible stator core (internal-external divisible iron core).

Specifically, the stator core 21 includes a radially outer core 21a (outer peripheral iron core) arranged on a radially outer side of the stator core 21, and a radially inner core 21b (inner peripheral iron core) arranged on a radially outer side of the stator core 21. The radially inner core 21b is provided with a plurality of (for example, 48) teeth 22. The radially inner core 21b includes the teeth 22 and a plurality of (for example, 48) slots 23 each located between adjacent teeth 22. In the first embodiment, the slots 23 are open to a radially outer side of the radially inner core 21b. The stator core 21 having the plurality of (in the first embodiment, 48) slots 23 (closed slots) is structured by combining the radially outer core 21a and the radially inner core 21b together.

The coil 30 is arranged in the slots 23 of the stator core 21. For example, the coil 30 is structured by conductor wires. The conductor wire may be formed as any one of a rectangular wire and a round wire.

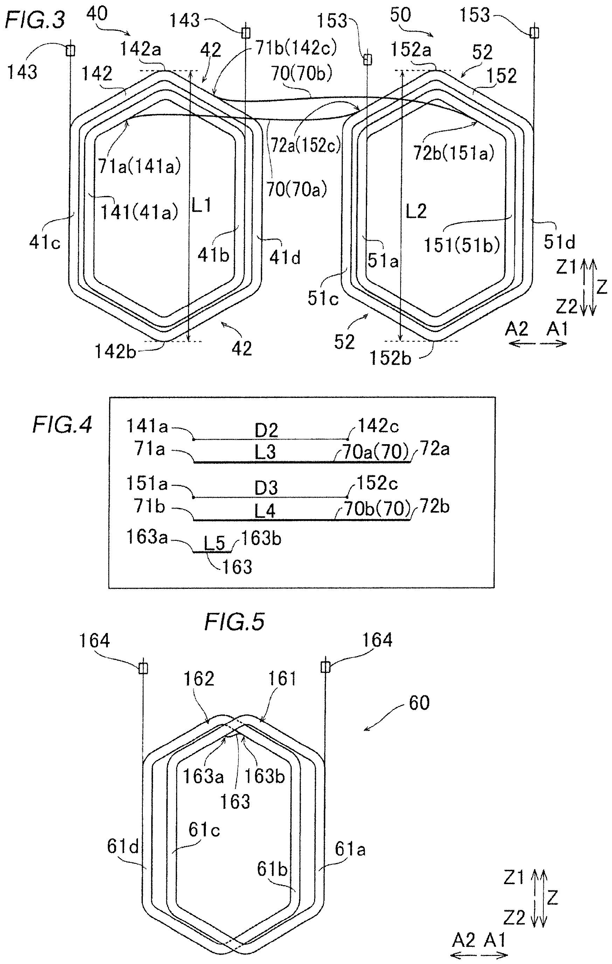

As illustrated in FIG. 1, the stator core 21 is structured to have a bore diameter D1 (bore diameter of the radially inner core 21b). The bore diameter D1 is larger than a length L1 of a first coil portion 40 in the axial direction (see FIG. 3), and is larger than a length L2 of a second coil portion 50 in the axial direction (see FIG. 3).

### (Structure of Coil)

Next, the structure of the coil 30 is described with reference to FIG. 2. FIG. 2 illustrates only the coil 30 of one phase that is arranged in the 48 (slot numbers #1 to #48) slots 23.

For example, in the first embodiment, a U-phase coil 30 is arranged on both of a radially inner side and a radially outer side of the slot 23 with slot number #1, a W-phase coil 30 is arranged on a radially inner side of the slot 23 with slot number #2, and the U-phase coil 30 is arranged on a radially outer side of the slot 23 with slot number #2. The W-phase coil 30 is arranged on both of a radially inner side and a radially outer side of the slot 23 with slot number #3. Thus, the coils 30 are wound in the slots 23 with slot numbers #1, #2, #3, #4, #5, #6, #7, ... in the order of U-U (coil wound on radially inner side - coil wound on radially outer side), U-W, W-W, W-V, V-V, V-U, and U-U.

In the first embodiment, the coil 30 includes the first coil portion 40, the second coil portion 50, and a third coil portion group 60 (third coil portions 60a to 60f). Each of the coils 30 of the three phases (U phase, V phase, and W phase) includes the first coil portion 40, the second coil portion 50, and the third coil portion group 60.

As illustrated in FIG. 2, the first coil portion 40 is formed of a single-layer lap winding coil including a plurality of (for example, two) concentric coil parts that are a first inner coil part 141 and a first outer coil part 142. Specifically, in the first embodiment, the first coil portion 40 is formed of a single-layer lap winding coil including a pair of first slot-housed portions 41 respectively arranged on the radially outer sides (opening sides) of the slots 23 with slot numbers #1 and #2 and on radially outer sides (opening sides) of the slots 23 with slot numbers #43 and #44, and first coil end portions 42 connecting the pair of first slot-housed portions 41 together on both sides in the rotational axis direction. The single-layer lap winding coil herein refers to a coil having slot-housed portions respectively arranged only on radially outer sides of the slots 23 or only on radially inner sides of the slots 23. Each of the slots 23 with slot numbers #1, #2, and #48 is an example of a "first slot". Each of the slots 23 with slot numbers #42, #43, and #44 is an example of a "second slot".

The second coil portion 50 is formed of a single-layer lap winding coil including a plurality of (for example, two) concentric coil parts that are a second inner coil part 151 and a second outer coil part 152. Specifically, in the first embodiment, the second coil portion 50 is formed of a single-layer lap winding coil including a pair of second slot-housed portions 51 respectively arranged on radially inner sides (deep sides) of the slots 23 with slot numbers #1 and #48 and on radially inner sides (deep sides) of the slots 23 with slot numbers #6 and #7 that are slots different from those with slot numbers #43 and #44 and are arranged opposite to slot numbers #1 and #48 from slot numbers #43 and #44 in the circumferential direction (on the arrow A1 direction side), and second coil end portions 52 connecting the pair of second slot-housed portions 51 together on both sides in the rotational axis direction. Each of the slots 23 with slot numbers #6, #7, and #8 is an example of a "third slot".

The third coil portion group 60 includes the third coil portions 60a to 60f. In the first embodiment, each of the third coil portions 60a to 60f is formed of a double-layer lap winding coil including a plurality of (for example, two (twin)) double-layer coil parts (one-side coil part 161 and other-side coil part 162). The double-layer lap winding coil herein refers to a coil having slot-housed portions respectively arranged on radially outer sides of the slots 23 and on radially inner sides of the slots 23. The third coil portion 60a includes a third slot-housed portion 61 arranged on radially inner sides of the slots 23 with slot numbers #42 and #43. The third coil portion 60f includes a third slot-housed portion 61 arranged on radially outer sides of the slots 23 with slot numbers #7 and #8. In the third coil portions 60b to 60e, a third slot-housed portion 61 of one of adjacent third coil portions (any one of the third coil portions 60b to 60e) is arranged on a radially outer side of the same slot 23, and a third slot-housed portion 61 of the other the adjacent third coil portions (any one of the third coil portions 60b to 60e) is arranged on a radially inner side of the same slot 23. Each of the one-side coil part 161 and the other-side coil part 162 is an example of a "double-layer coil part" in the claims.

In the coil 30, portions other than the first coil portion 40 formed of the single-layer lap winding coil and the second coil portion 50 formed of the single-layer lap winding coil are structured by the third coil portion group 60 including the third coil portions 60a to 60f each formed of the double-layer lap winding coil.

In the first embodiment, as illustrated in FIG. 3, the first inner coil part 141 of the first coil portion 40 is wound on an inner side of the first outer coil part 142 in the circumferential direction and in the axial direction (concentric circle). The first outer coil part 142 is wound on an outer side of the first inner coil part 141 in the circumferential direction and in the axial direction (outer side with respect to the concentric circle). The second inner coil part 151 of the second coil portion 50 is wound on an inner side of the second outer coil part 152 in the circumferential direction (concentric circle). The second outer coil part 152 is wound on an outer side of the second inner coil part 151 in the circumferential direction (outer side with respect to the concentric circle). Each of the first inner coil part 141, the first outer coil part 142, the second inner coil part 151, and the second outer coil part 152 is formed of a conductor wire (rectangular wire or round wire) that is wound a plurality of times.

In the first embodiment, as illustrated in FIG. 3, the length L1 of the first coil portion 40 in the rotational axis direction is smaller than the bore diameter D1 of the stator core 21 (see FIG. 1). The length L2 of the second coil portion 50 in the rotational axis direction is smaller than the bore diameter D1 of the stator core 21. The length L1 of the first coil portion 40 in the rotational axis direction refers to a distance between an upper end 142a and a lower end 142b of the first outer coil part 142. The length L2 of the second coil portion 50 in the rotational axis direction refers to a distance between an upper end 152a and a lower end 152b of the second outer coil part 152. FIG. 3 illustrates that the length L1 of the first coil portion 40 in the rotational axis direction and the length L2 of the second coil portion 50 in the rotational axis direction are substantially equal to each other, but the length L1 and the length L2 may be different from each other.

In the first embodiment, as illustrated in FIG. 3, the coil 30 includes a first connecting wire portion 70. The second coil portion 50 is continuously connected to other-side ends 72a and 72b of the first connecting wire portion 70 having one-side ends 71a and 71b continuously connected to the first coil portion 40. That is, the first coil portion 40, the second coil portion 50, and the first connecting wire portion 70 are formed of a single continuous conductor wire. Specifically, the first connecting wire portion 70 connects the first coil end portion 42 and the second coil end portion 52 together.

Specifically, the first connecting wire portion 70 includes inter-coil conductor wires 70a and 70b. In the first embodiment, the inter-coil conductor wire 70a is structured to continuously connect the first coil end portion 42 of the first inner coil part 141 and the second coil end portion 52 of the second outer coil part 152 together. The inter-coil conductor wire 70b is structured to continuously connect the first coil end portion 42 of the first outer coil part 142 and the second coil end portion 52 of the second inner coil part 151 together. That is, the first inner coil part 141 and the second outer coil part 152 are connected together in series. The first outer coil part 142 and the second inner coil part 151 are connected together in series.

The inter-coil conductor wire 70a is an example of a "one-side first connecting wire portion" and a "first connecting wire portion" in the claims. The inter-coil conductor wire 70b is an example of an "other-side first connecting wire portion" and the "first connecting wire portion" in the claims. The term "continuously" herein refers to not only a state in which components are simply connected together, but also a state in which coils are connected together without connecting conductor wires together by using, for example, a connecting terminal. FIG. 3 illustrates a single inter-coil conductor wire 70a and a single inter-coil conductor wire 70b (as a single conductor wire), but a plurality of inter-coil conductor wires 70a and a plurality of inter-coil conductor wires 70b may be structured (as a plurality of conductor wires).

The first inner coil part 141 includes a first inner connecting point 141a continuously connected to the one-side end 71a of the inter-coil conductor wire 70a. The first outer coil part 142 includes a first outer connecting point 142c continuously connected to the one-side end 71b of the inter-coil conductor wire 70b. The first inner connecting point 141a and the first outer connecting point 142c are provided on the first coil end portion 42. The second inner coil part 151 includes a second inner connecting point 151a continuously connected to the other-side end 72b of the inter-coil conductor wire 70b. The second outer coil part 152 includes a second outer connecting point 152c continuously connected to the other-side end 72a of the inter-coil conductor wire 70a. The second inner connecting point 151a and the second outer connecting point 152c are provided on the second coil end portion 52. The first inner connecting point 141a is an example of a "first connecting portion" in the claims. The first outer connecting point 142c is an example of the "first connecting portion" in the claims. The second inner connecting point 151a is an example of a "second connecting portion" in the claims. The second outer connecting point 152c is an example of the "second connecting portion" in the claims.

More specifically, as illustrated in FIG. 2, first slot-housed portions 41a and 41b of the first inner coil part 141 are respectively arranged on the radially outer sides of the slots 23 with slot numbers #44 and #1. First slot-housed portions 41c and 41d of the first outer coil part 142 are respectively arranged on the radially outer sides of the slots 23 with slot numbers #43 and #2. Second slot-housed portions 51a and 51b of the second inner coil part 151 are respectively arranged on the radially inner sides of the slots 23 with slot numbers #1 and #6. Second slot-housed portions 51c and 51d of the second outer coil part 152 are respectively arranged on the radially inner sides of the slots 23 with slot numbers #48 and #7.

The inter-coil conductor wire 70a continuously connects the first inner coil part 141 (vicinity of slot number #44) and the second outer coil part 152 (vicinity of slot number #48) together. The inter-coil conductor wire 70b continuously connects the first outer coil part 142 (vicinity of slot number #2) and the second inner coil part 151 (vicinity of slot number #6) together.

In the first embodiment, as illustrated in FIG. 4, a length L3 of the inter-coil conductor wire 70a is larger than a shortest distance D2 between the first inner connecting point 141a and the first outer connecting point 142c. A length L4 of the inter-coil conductor wire 70a is larger than a shortest distance D3 between the first inner connecting point 141a and the first outer connecting point 142c. That is, the first connecting wire portion 70 has the lengths L3 and L4 that allow the second coil portion 50 to be attached to the stator core 21 in a state in which the first coil portion 40 and the second coil portion 50 are connected together and the first coil portion 40 is retreated to the outside of the stator core 21 (center C side of the radially inner core 21b). The first connecting wire portion 70 has the lengths L3 and L4 that allow the retreated first coil portion 40 to be attached to the stator core 21 in a state in which the second coil portion 50 is attached to the stator core 21.

As illustrated in FIG. 5, each of the third coil portions 60a to 60f includes the one-side coil part 161 arranged on one side in the circumferential direction (arrow A1 direction side), and the other-side coil part 162 arranged on the other side in the circumferential direction (arrow A2 direction side). Each of the one-side coil part 161 and the other-side coil part 162 is formed of a conductor wire (rectangular wire or round wire) that is wound a plurality of times. The one-side coil part 161 and the other-side coil part 162 are connected together in series by an inter-coil conductor wire 163. The inter-coil conductor wire 163 is an example of a "second connecting wire portion" in the claims. FIG. 5 illustrates the inter-coil conductor wire 163 as a single conductor wire, but the inter-coil conductor wire 163 may be structured as a plurality of conductor wires.

In the first embodiment, as illustrated in FIG. 4, the length L3 of the inter-coil conductor wire 70a and the length L4 of the inter-coil conductor wire 70a are larger than a length L5 of the inter-coil conductor wire 163 connecting the one-side coil part 161 and the other-side coil part 162 of each of the third coil portions 60a to 60f together.

As illustrated in FIG. 2, the one-side coil part 161 of the third coil portion 60a is wound (arranged) in the slots 23 with slot numbers #38 and #43. The other-side coil part 162 of the third coil portion 60a is wound in the slots 23 with slot numbers #37 and #42. The one-side coil part 161 of the third coil portion 60f is wound in the slots 23 with slot numbers #8 and #12. The other-side coil part 162 of the third coil portion 60f is wound in the slots 23 with slot numbers #7 and #11.

Third slot-housed portions 61a and 61b of the third coil portion 60a (third slot-housed portions 61a and 61b at the one-side end of the third coil portion group 60 in the circumferential direction) are respectively arranged on the radially inner sides of the slots 23 with slot numbers #42 and #43 (second slots). Third slot-housed portions 61c and 61d of the third coil portion 60a are respectively arranged on radially outer sides of the slots 23 with slot numbers #37 and #38.

Third slot-housed portions 61a and 61b of the third coil portion 60f are respectively arranged on radially inner sides of the slots 23 with slot numbers #11 and #12. Third slot-housed portions 61c and 61d of the third coil portion 60f (third slot-housed portions 61a and 61b at the other-side end of the third coil portion group 60 in the circumferential direction) are respectively arranged on the radially outer sides of the slots 23 with slot numbers #7 and #8 (third slots).

In the first embodiment, as illustrated in FIG. 1 and FIG. 2, the coil 30 including the first coil portion 40, the second coil portion 50, and the third coil portion group 60 is structured to be attached to the slots 23 from the radially outer side toward the radially inner side of the stator core 21 (radially inner core 21b). End wires 143 of the first coil portion 40 (see FIG. 3), end wires 153 of the second coil portion 50, and end wires 164 of the third coil portion group 60 (see FIG. 5) are structured to be routed together by connecting wires (not illustrated) after the first coil portion 40, the second coil portion 50, and the third coil portion group 60 are arranged in the slots 23. Thus, the first coil portion 40, the second coil portion 50, and the third coil portions 60a to 60f of the third coil portion group 60 are connected together in parallel (eight-parallel connection).

### (Effects of Structure of First Embodiment)

In the first embodiment, the following effects can be attained.

In the first embodiment, as illustrated in FIG. 2, the coil 30 includes the first coil portion 40 formed of the single-layer lap winding coil including the pair of first slot-housed portions 41 respectively arranged on the radially outer sides of the slots 23 with slot numbers #1 and #2 and on the radially outer sides of the slots 23 with slot numbers #43 and #44. The coil 30 further includes the second coil portion 50 continuously connected to the other-side ends 72a and 72b of the first connecting wire portion 70 having the one-side ends 71a and 71b continuously connected to the first coil portion 40, and formed of the single-layer lap winding coil including the pair of second slot-housed portions 51 respectively arranged on the radially inner sides of the slots 23 with slot numbers #1 and #48 and on the radially inner sides of the slots 23 with slot numbers #6 and #7 that are the slots 23 different from the slots 23 with slot numbers #43 and #44 and are arranged opposite to the slots 23 with slot numbers #1 and #48 from the slots 23 with slot numbers #43 and #44. The coil 30 further includes the third coil portion group 60 including the third coil portions 60a to 60f each formed of the double-layer lap winding coil. The coil 30 includes the third coil portion 60a including the third slot-housed portion 61 arranged on the radially inner sides of the slots 23 with slot numbers #42 and #43 and serving as the one-side end of the third coil portion group 60 in the circumferential direction, and the third coil portion 60f including the third slot-housed portion 61 arranged on the radially outer sides of the slots 23 with slot numbers #6 and #7 and serving as the other-side end of the third coil portion group 60 in the circumferential direction. Thus, when the slots 23 are open to the radially outer side of the stator core 21, it is possible to first arrange the second coil portion 50 formed of the single-layer lap winding coil in the stator core 21 in the state in which the first coil portion 40 is retreated to the outside of the stator core 21 (for example, the radially inner side of the stator core 21), arrange the third coil portion group 60 formed of the double-layer lap winding coils in the stator core 21, and finally arrange, in the stator core 21, the first coil portion 40 that is arranged on (retreated to) the outside of the stator core 21.

As a result, in the first embodiment, the first slot-housed portions 41 of the first coil portion 40 can be arranged in slot numbers #1, #2, #43, and #44 without bypassing (temporarily removing) the second slot-housed portion 51 of the second coil portion 50 that is first arranged in the stator core 21 while keeping the state in which the first coil portion 40 and the second coil portion 50 are continuously connected together. Thus, an operation of arranging the coil 30 in the slots 23 can be mechanized (automated) easily. There is no need to route (or change the routing of) the first coil portion 40 and the second coil portion 50 after the first coil portion 40 and the second coil portion 50 are arranged in the stator core 21. Thus, the operation of arranging the coil 30 in the slots 23 can be mechanized (automated) easily.

There is no need to route (or change the routing of) the first coil portion 40 and the second coil portion 50. Therefore, there is no need to secure a space for providing a connecting terminal and an insulating member for performing the routing (or changing the routing). Thus, an increase in the size of the coil 30 (rotating electrical machine 100) can be prevented. As a result, the operation of arranging the coil 30 in the slots 23 can be mechanized (automated) easily and deterioration of the balance of flux linkage can be prevented while the increase in the size of the coil 30 (rotating electrical machine 100) is prevented.

In the first embodiment, the second coil portion 50 is structured to be continuously connected to the other-side ends 72a and 72b of the first connecting wire portion 70 having the one-side ends 71a and 71b continuously connected to the first coil portion 40. Therefore, the second coil portion 50 and the first coil portion 40 can be structured to have a connection relationship equivalent to the double-layer lap winding coil. Thus, even when the first coil portion 40 and the second coil portion 50 are structured by the single-layer lap winding coils, the deterioration of the balance of flux linkage can be prevented. As a result, the operation of arranging the coil 30 in the slots 23 can be mechanized (automated) easily and the deterioration of the balance of flux linkage can be prevented while the increase in the size of the coil 30 (rotating electrical machine 100) is prevented.

In the first embodiment, each of the third coil portions 60a to 60f is structured such that the one-side coil part 161 and the other-side coil part 162 are continuously connected together via the inter-coil conductor wire 163. The inter-coil conductor wire 70a is structured to have the length L3 that is larger than the length L5 of the inter-coil conductor wire 163. The inter-coil conductor wire 70b is structured to have the length L4 that is larger than the length L5 of the inter-coil conductor wire 163. Thus, the second coil portion 50 can be arranged in the stator core 21 easily in the state in which the first coil portion 40 is retreated to the outside of the stator core 21 because the lengths of the first connecting wire portion 70 (inter-coil conductor wires 70a and 70b) are relatively larger.

In the first embodiment, the first coil portion 40 is provided with the first inner coil part 141 wound on the inner side in the circumferential direction, and the first outer coil part 142 wound on the outer side of the first inner coil part 141 in the circumferential direction. The second coil portion 50 is provided with the second inner coil part 151 wound on the inner side in the circumferential direction, and the second outer coil part 152 wound on the outer side of the second inner coil part 151 in the circumferential direction. The first connecting wire portion 70 is provided with the inter-coil conductor wire 70a continuously connecting the first inner coil part 141 and the second outer coil part 152 together, and the inter-coil conductor wire 70b continuously connecting the first outer coil part 142 and the second inner coil part 151 together. Thus, even when the first coil portion 40 and the second coil portion 50 are structured by the twin single-layer lap winding coils, the second coil portion 50 can be arranged in the stator core 21 in the state in which the first coil portion 40 is retreated to the outside of the stator core 21 owing to the inter-coil conductor wires 70a and 70b. The first coil portion 40 and the second coil portion 50 can be structured to have a connection relationship equivalent to the double-layer lap winding coil owing to the inter-coil conductor wires 70a and 70b. Thus, the deterioration of the balance of flux linkage can be prevented.

In the first embodiment, the length L1 of the first coil portion 40 in the rotational axis direction is set smaller than the bore diameter D1 of the stator core 21. Thus, it is possible to arrange the second coil portion 50 in the stator core 21 while retreating the first coil portion 40 to the radially inner side of the stator core 21, and then arrange the first coil portion 40 in the stator core 21 by pivoting the first coil portion 40 in the axial direction across the space on the radially inner side of the stator core 21 in a state in which the first inner connecting point 141a and the first outer connecting point 142c of the first coil portion 40 are located closer to the second coil portion 50. As a result, the necessary length of the first connecting wire portion 70 can be reduced because the first inner connecting point 141a and the first outer connecting point 142c are located closer to the second coil portion 50 as compared to a case where the first coil portion 40 is arranged on an outer side of the stator core 21 in the axial direction and is translated in the axial direction. As a result, an increase in the size of the space necessary to arrange the first connecting wire portion 70 can be prevented. Thus, an increase in the size of the rotating electrical machine 100 (stator) can be prevented.

In the first embodiment, the first inner coil part 141 of the first coil portion 40 is structured to include the first inner connecting point 141a continuously connected to the one-side end 71a of the inter-coil conductor wire 70a. The first outer coil part 142 of the first coil portion 40 is structured to include the first outer connecting point 142c continuously connected to the one-side end 71b of the inter-coil conductor wire 70b. The second inner coil part 151 of the second coil portion 50 is structured to include the second inner connecting point 151a continuously connected to the other-side end 72b of the inter-coil conductor wire 70b. The second outer coil part 152 of the second coil portion 50 is structured to include the second outer connecting point 152c continuously connected to the other-side end 72a of the inter-coil conductor wire 70a. The length L3 of the inter-coil conductor wire 70a is set larger than the shortest distance D2 between the first inner connecting point 141a and the first outer connecting point 142c. The length L4 of the inter-coil conductor wire 70a is set larger than the shortest distance D3 between the first inner connecting point 141a and the first outer connecting point 142c. Thus, the second coil portion 50 can be arranged in the stator core 21 easily in the state in which the first coil portion 40 is retreated to the outside of the stator core 21 owing to the first connecting wire portion 70 (inter-coil conductor wires 70a and 70b) whose lengths are relatively larger.

### (Method for Manufacturing Stator)

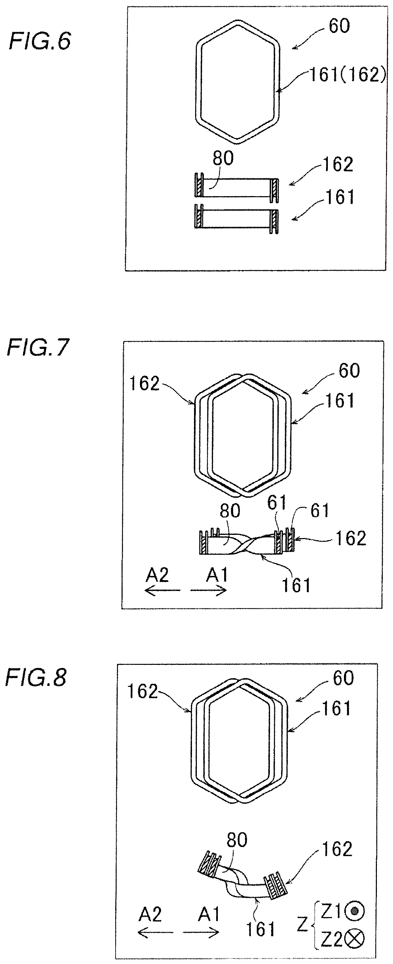

Next, a method for manufacturing the stator 20 of the rotating electrical machine 100 (method for manufacturing the coil 30) is described with reference to FIG. 1, FIG. 3, and FIG. 6 to FIG. 14. In FIG. 6 to FIG. 8, a front-side elevation of the coil is illustrated at an upper stage, and a sectional view of the coil (sectional view that is seen in the rotational axis direction) is illustrated at a lower stage.

### <Step of Assembling Coil>

As illustrated in FIG. 6, the one-side coil part 161 and the other-side coil part 162 for structuring each of the third coil portions 60a to 60f formed of the double-layer lap winding coils are prepared. Each of the third coil portions 60a to 60f (the same applies to the first coil portion 40 and the second coil portion 50 described later) is covered with insulating paper 80.

Next, as illustrated in FIG. 7, the one-side coil part 161 and the other-side coil part 162 are caused to overlap each other so that the one-side coil part 161 is arranged on one side (arrow A1 direction side) and the other-side coil part 162 is arranged on the other side (arrow A2 direction side). At this time, the one-side coil part 161 and the other-side coil part 162 are deformed in a twisted manner so that the third slot-housed portion 61 of the one-side coil part 161 and the third slot-housed portion 61 of the other-side coil part 162 overlap each other in the circumferential direction.

Next, as illustrated in FIG. 8, each of the third coil portions 60a to 60f in a state in which the one-side coil part 161 and the other-side coil part 162 are caused to overlap each other is deformed into an arc shape as seen in the rotational axis direction of the rotating electrical machine 100 so that each of the third coil portions 60a to 60f can be arranged in the slots 23. The third coil portion group 60 is structured by the third coil portions 60a to 60f.

As illustrated in FIG. 3, the first coil portion 40 and the second coil portion 50 continuously connected to the other-side ends 72a and 72b of the first connecting wire portion 70 having the one-side ends 71a and 71b continuously connected to the first coil portion 40 are prepared.

Specifically, the first inner coil part 141 and the first outer coil part 142 for structuring the first coil portion 40 formed of the single-layer lap winding coil are prepared. The second inner coil part 151 and the second outer coil part 152 for structuring the second coil portion 50 formed of the single-layer lap winding coil are prepared. In the prepared state, the second inner coil part 151 is continuously connected to the other-side end 72b of the inter-coil conductor wire 70b having the one-side end 71b continuously connected to the first inner coil part 141. The second outer coil part 152 is continuously connected to the other-side end 72a of the inter-coil conductor wire 70a having the one-side end 71a continuously connected to the first outer coil part 142.

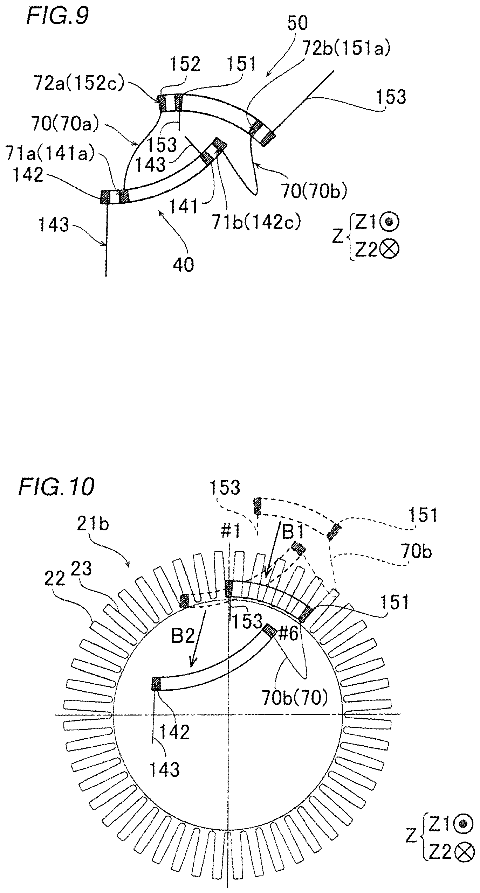

As illustrated in FIG. 9, in a state in which the first outer coil part 142 is arranged on the outer side of the first inner coil part 141 in the circumferential direction, the first coil portion 40 is deformed into an arc shape as seen in the rotational axis direction of the rotating electrical machine 100 so that the first coil portion 40 can be arranged in the slots 23. Similarly, the second coil portion 50 is formed (deformed) into an arc shape.

### <Step of Arranging Coil in Stator Core>

In the first embodiment, as illustrated in FIG. 10, the first coil portion 40 formed of the single-layer lap winding coil including the pair of first slot-housed portions 41 to be arranged on the radially outer sides of the slots 23 with slot numbers #1, #2, #43, and #44 of the stator core 21 is retreated to the outside of the stator core 21. In this state, the second coil portion 50 continuously connected to the other-side ends 72a and 72b of the first connecting wire portion 70 having the one-side ends 71a and 71b continuously connected to the first coil portion 40, and formed of the single-layer lap winding coil including the pair of second slot-housed portions 51 to be arranged on the radially inner sides of slot numbers #6 and #7 that are different from the slots 23 with slot numbers #43 and #44 is arranged in the stator core 21.

Specifically, as illustrated in FIG. 10, the second inner coil part 151 of the second coil portion 50 is moved in an arrow B1 direction, and therefore the second slot-housed portions 51 of the second inner coil part 151 are arranged on (attached to) the radially inner sides (deep sides) of the slots 23 with slot numbers #1 and #6 from opening sides of the slots 23. The first outer coil part 142 of the first coil portion 40 that is connected to the second inner coil part 151 by the inter-coil conductor wire 70b is moved in an arrow B2 direction, and therefore the first outer coil part 142 is retreated to (arranged on) the radially inner side of the stator core 21 (radially inner core 21b). At this time, the first outer coil part 142 is preferably held on the radially inner side of the stator core 21 by a manufacturing apparatus or the like.

In the first embodiment, when the second coil portion 50 is arranged in the stator core 21, the first coil portion 40 is retreated to a position where the first coil portion 40 and the stator core 21 do not overlap each other as seen in the rotational axis direction (as seen from an arrow Z1 direction side), and to a position on the radially inner side of the stator core 21.

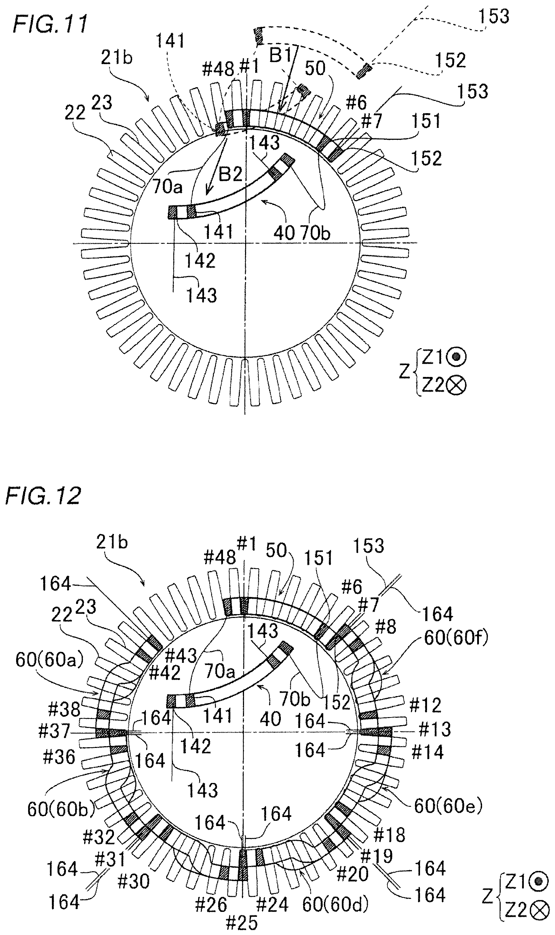

After that, as illustrated in FIG. 11, the second outer coil part 152 of the second coil portion 50 is moved in the arrow B1 direction, and therefore the second slot-housed portions 51 of the second outer coil part 152 are arranged on (attached to) the radially inner sides (deep sides) of the slots 23 with slot numbers #48 and #7 from opening sides of the slots 23. The first inner coil part 141 of the first coil portion 40 that is connected to the second outer coil part 152 by the inter-coil conductor wire 70a is moved in the arrow B2 direction, and therefore the first inner coil part 141 is retreated to (arranged on) the radially inner side of the stator core 21 (radially inner core 21b) so as not to interfere with the other coil portions.

Subsequently, in the first embodiment, as illustrated in FIG. 12, the third coil portion 60f formed of the double-layer lap winding coil including the third slot-housed portion 61 to be arranged on the radially outer sides (opening sides) of the slots 23 with slot numbers #7 and #8 (third slots) and to serve as the other-side end of the third coil portion group 60 in the circumferential direction, and the third slot-housed portion 61 to be arranged on the radially inner sides (deep sides) of the slots 23 with slot numbers #12 and #13 is attached to the stator core 21 by being moved from the radially outer side to the radially inner side of the stator core 21. Similarly, the third coil portions 30e, 30d, 30c, and 30b are arranged in this order one by one in the slots 23 of the stator core 21 from the radially outer side toward the radially inner side of the stator core 21.

After that, in the first embodiment, the third coil portion 60a formed of the double-layer lap winding coil including the third slot-housed portion 61 to be arranged on the radially outer sides (opening sides) of the slots 23 with slot numbers #37 and #38, and the third slot-housed portion 61 to be arranged on the radially inner sides (deep sides) of the slots 23 with slot numbers #42 and #43 (second slots) and to serve as the one-side end of the third coil portion group 60 in the circumferential direction is attached to the stator core 21 by being moved from the radially outer side to the radially inner side of the stator core 21.

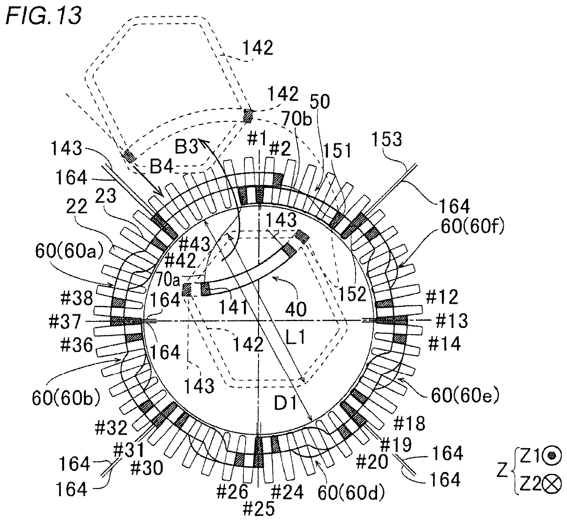

Thereafter, in the first embodiment, as illustrated in FIG. 13, the first coil portion 40 retreated to the outside of the stator core 21 (radially inner side of the radially inner core 21b) is arranged in the stator core 21. Specifically, the retreated first coil portion 40 is arranged by being moved from the radially inner side to the radially outer side of the stator core 21 (in an arrow B3 direction) and moved into the stator core 21 from the radially outer side of the stator core 21 (in an arrow B4 direction).

More specifically, the first outer coil part 142 of the retreated first coil portion 40 is moved from the position on the radially inner side of the stator core 21 to a position on the radially outer side of the stator core 21 by being flipped over the radially inner core 21b in the arrow B3 direction. Specifically, the first coil portion 40 is pivoted in the axial direction across the space on the radially inner side of the stator core 21 in a state in which the first inner connecting point 141a and the first outer connecting point 142c of the first coil portion 40 are located closer to the second coil portion 50. The length L1 of the first outer coil part 142 is smaller than the bore diameter D1 of the stator core 21, and therefore the first outer coil part 142 and the stator core 21 can be prevented from interfering with each other when the first outer coil part 142 is flipped.

Thereafter, the first outer coil part 142 moved to the radially outer side of the stator core 21 is moved in the arrow B4 direction, and therefore the first slot-housed portions 41 of the first outer coil part 142 are arranged on the radially outer sides (opening sides) of the slots 23 with slot numbers #43 and #2. At this time, the radially outer sides of the slots 23 with slot numbers #43 and #2 are unoccupied (see FIG. 12). Therefore, the first coil portion 40 is arranged in the slots 23 of the stator core 21 without temporarily removing (bypassing) the second slot-housed portion 51 of the second coil portion 50 or the third slot-housed portion 61 of the third coil portion 60a or 60f out of the slots 23.

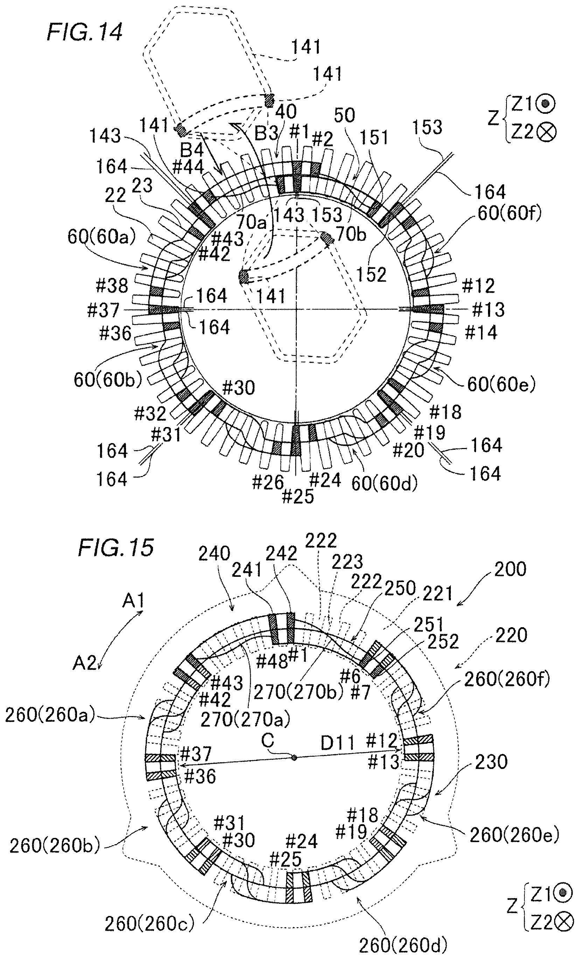

Thereafter, as illustrated in FIG. 14, similarly to the first outer coil part 142, the first inner coil part 141 of the retreated first coil portion 40 is moved from the position on the radially inner side of the stator core 21 to a position on the radially outer side of the stator core 21 by being flipped over the radially inner core 21b in the arrow B3 direction. Subsequently, the first inner coil part 141 moved to the radially outer side of the stator core 21 is moved in the arrow B4 direction, and therefore the first slot-housed portions 41 of the first inner coil part 141 are arranged on the radially outer sides (opening sides) of the slots 23 with slot numbers #44 and #1.

As described above, in the first embodiment, the first coil portion 40, the second coil portion 50, and the third coil portions 60a to 60f are arranged in the stator core 21 one by one.

### <Step of Assembling Stator Core>

After that, as illustrated in FIG. 1, the radially inner core 21b to which the coil 30 is attached and the radially outer core 21a are moved in the axial direction relative to each other, and are therefore fitted together (clearance fit).

Finally, the first coil portion 40, the second coil portion 50, and the third coil portions 60a to 60f are routed together in parallel (eight-parallel connection) by connecting wires (not illustrated) after the first coil portion 40, the second coil portion 50, and the third coil portions 60a to 60f are arranged in the slots 23.

### (Effects of Manufacturing Method of First Embodiment)

In the first embodiment, the following effects can be attained.

In the first embodiment, the first coil portion 40 formed of the single-layer lap winding coil including the pair of first slot-housed portions 41 to be arranged on the radially outer sides of the slots 23 with slot numbers #1, #2, #43, and #44 of the stator core 21 is retreated to the outside of the stator core 21. In this state, the second coil portion 50 continuously connected to the other-side ends 72a and 72b of the first connecting wire portion 70 having the one-side ends 71a and 71b continuously connected to the first coil portion 40, and formed of the single-layer lap winding coil including the pair of second slot-housed portions 51 to be arranged on the radially inner sides of slot numbers #6 and #7 that are different from the slots 23 with slot numbers #43 and #44 is arranged in the stator core 21. Subsequently, the third coil portion 60a formed of the double-layer lap winding coil including the third slot-housed portion 61 to be arranged on the radially inner sides (deep sides) of the slots 23 with slot numbers #42 and #43 is attached to the stator core 21. Thereafter, the first coil portion 40 retreated to the outside of the stator core 21 (radially inner side of the radially inner core 21b) is arranged in the stator core 21. As a result, the operation of arranging the coil 30 in the slots 23 can be mechanized (automated) easily while the increase in the size of the coil 30 (rotating electrical machine 100) is prevented.

In the first embodiment, as described above, the arrangement of the second coil portion 50 in the stator core 21 is performed in such a manner that the second coil portion 50 is arranged in the stator core 21 in the state in which the first coil portion 40 is retreated to the position where the first coil portion 40 and the stator core 21 do not overlap each other as seen in the rotational axis direction, and to the radially inner side of the stator core 21. Therefore, when the second coil portion 50 is arranged in the stator core 21, the second coil portion 50 or the manufacturing apparatus for arranging the second coil portion 50 in the stator core 21 can be prevented from interfering with the retreated first coil portion 40. Thus, the second coil portion 50 can be arranged in the stator core 21 easily in the state in which the first coil portion 40 is retreated.

In the first embodiment, as described above, the arrangement of the second coil portion 50 in the stator core 21 is performed in such a manner that the second coil portion 50 is arranged on the radially inner sides of slot numbers #1, #6, #7, and #48 of the stator core 21 in the state in which the first coil portion 40 is retreated to the radially inner side of the stator core 21. Therefore, when the second coil portion 50 is arranged from the radially outer side to the radially inner side of the stator core 21, the second coil portion 50 or the manufacturing apparatus for arranging the second coil portion 50 in the stator core 21 can be prevented from interfering with the retreated first coil portion 40 because the first coil portion 40 is retreated to the radially inner side of the stator core 21. As a result, the second coil portion 50 can be arranged in the stator core 21 more easily in the state in which the first coil portion 40 is retreated.

In the first embodiment, as described above, the arrangement of the first coil portion 40 in the stator core 21 is performed in such a manner that the second coil portion 50 is arranged in the stator core 21 in the state in which the first coil portion 40 is retreated to the radially inner side of the stator core 21 and then the first coil portion 40 is moved from the radially inner side to the radially outer side of the stator core 21 (moved in the arrow B3 direction in FIG. 13 and FIG. 14) and is arranged in the stator core 21 from the radially outer side of the stator core 21 (moved in the arrow B4 direction in FIG. 13 and FIG. 14). Thus, the retreated first coil portion 40 can be arranged in the slots 23 easily from the radially outer side of the stator core 21.

### [Second Embodiment]

### (Structure of Rotating Electrical Machine)

The structure of a rotating electrical machine 200 according to a second embodiment is described with reference to FIG. 15. In the rotating electrical machine 200 (stator 220) according to the second embodiment, a stator core 221 is structured to have an opening on the radially inner side unlike the first embodiment described above in which the stator core 21 is structured to have an opening on the radially outer side. The same components as those of the first embodiment described above are represented by the same reference symbols to omit their description.

As illustrated in FIG. 15, in the rotating electrical machine 200, a coil 230 includes a first coil portion 240, a second coil portion 250, and a third coil portion group 260 (third coil portions 260a to 260f). The first coil portion 240 includes a first inner coil part 241 wound on an inner side in the circumferential direction, and a first outer coil part 242 wound on an outer side of the first inner coil part 241 in the circumferential direction. The second coil portion 250 includes a second inner coil part 251 wound on an inner side in the circumferential direction, and a second outer coil part 252 wound on an outer side of the second inner coil part 251 in the circumferential direction. The first inner coil part 241 and the second outer coil part 252 are continuously connected together by an inter-coil conductor wire 270a (first connecting wire portion 270). The first outer coil part 242 and the second inner coil part 251 are continuously connected together by an inter-coil conductor wire 270b (first connecting wire portion 270). The inter-coil conductor wire 270a is an example of the "one-side first connecting wire portion" and the "first connecting wire portion" in the claims. The inter-coil conductor wire 270b is an example of the "other-side first connecting wire portion" and the "first connecting wire portion" in the claims.

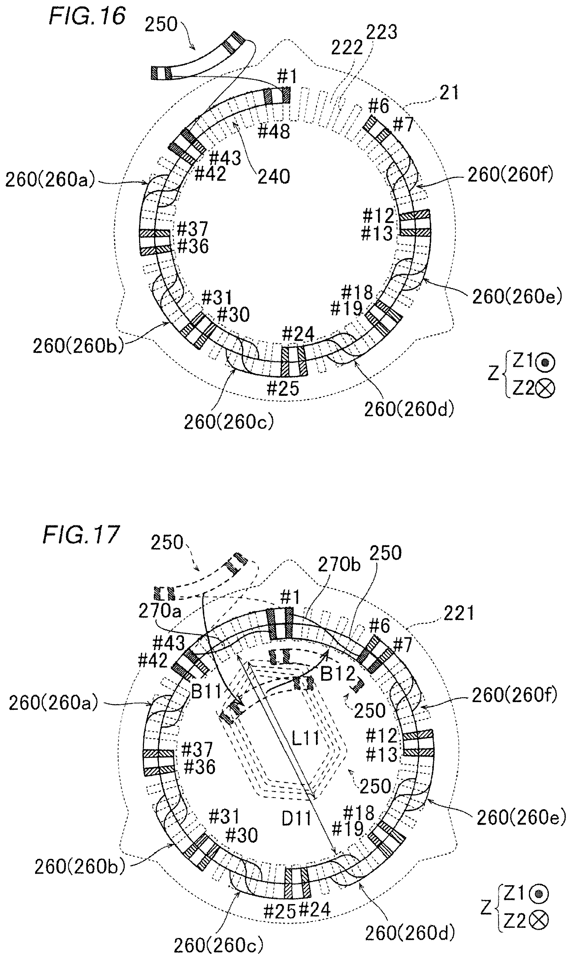

In the second embodiment, the stator core 221 includes a plurality of (for example, 48) teeth 222 extending toward the radially inner side (center C side), and a plurality of (for example, 48) slots 223 each formed between adjacent teeth 222 and open to the radially inner side (center C side). A bore diameter D11 of the stator core 221 (distance between the teeth 222 arranged point-symmetrically about the center C) is larger than a length L11 of the second coil portion 250 (see FIG. 17).

In the second embodiment, unlike the first embodiment, the second coil portion 250 is arranged on the radially inner sides (opening sides) of both the slots 223 with slot numbers #1 and #48 in which the first coil portion 240 is arranged. The third coil portion 260a is arranged on the radially inner sides (opening sides) of both the slots 223 with slot numbers #42 and #43 in which the first coil portion 240 is arranged. The third coil portion 260f is arranged on the radially outer sides (deep sides) of both the slots 223 with slot numbers #6 and #7 in which the second coil portion 250 is arranged. Each of the slots 23 with slot numbers #1 and #48 is an example of the "first slot" in the claims. Each of the slots 23 with slot numbers #42 and #43 is an example of the "second slot" in the claims. Each of the slots 23 with slot numbers #6 and #7 is an example of the "third slot" in the claims.

That is, in the second embodiment, a U-phase coil 230 is arranged on both of the radially inner side and the radially outer side of the slot 223 with slot number #48, and is also arranged on both of the radially inner side and the radially outer side of the slot 223 with slot number #1. A W-phase coil 230 is arranged on both of the radially inner side and the radially outer side of the slot 223 with slot number #2, and is also arranged on both of the radially inner side and the radially outer side of the slot 223 with slot number #3. A V-phase coil 230 is arranged on both of the radially inner side and the radially outer side of the slot 223 with slot number #4, and is also arranged on both of the radially inner side and the radially outer side of the slot 223 with slot number #5. Thus, the coils 230 are wound in the slots 223 with slot numbers #1, #2, #3, #4, #5, #6, #7, ... in the order of U-U (coil wound on radially inner side - coil wound on radially outer side), U-U, W-W, W-W, V-V, V-V, and U-U.

The other structures of the second embodiment are similar to those of the first embodiment described above.

### (Effects of Structure of Second Embodiment)

In the second embodiment, the following effects can be attained.

In the second embodiment, the slots 223 are open to the radially inner side of the stator core 221 with the structure described above. Therefore, it is possible to first arrange the first coil portion 240 formed of the single-layer lap winding coil in the stator core 221 in a state in which the second coil portion 250 is retreated to the outside of the stator core 221 (for example, the radially outer side of the stator core 221), arrange the third coil portion group 260 formed of the double-layer lap winding coils in the stator core 221, and finally arrange, in the stator core 221, the second coil portion 250 that is arranged on the outside of the stator core 221. As a result, also in the second embodiment, an operation of arranging the coil 30 in the slots 23 can be mechanized (automated) easily and deterioration of the balance of flux linkage can be prevented while an increase in the size of the coil 230 (rotating electrical machine 100) is prevented.

In the second embodiment, the second coil portion 250 is structured to be arranged on the radially inner sides (opening sides) of both the slots 223 with slot numbers #1 and #48 in which the first coil portion 240 is arranged. Thus, the efficiency of conversion from electric power to torque can be increased as compared to the case of the first embodiment in which the second coil portion 50 is arranged on the opening side of one slot 23 with slot number #1 out of slot numbers #1 and #2 in which the first coil portion 40 is arranged. In the structure of the first embodiment, generation of noise and vibration at the time of driving can be prevented as compared to the structure of the second embodiment.

### (Method for Manufacturing Stator)

Next, a method for manufacturing the stator 220 of the rotating electrical machine 200 is described with reference to FIG. 15 to FIG. 17.

### <Step of Assembling Coil>

A method for preparing the first coil portion 240, the second coil portion 250, and the third coil portion group 260 is similar to that of the first embodiment described above (see FIG. 3 and FIG. 5 to FIG. 9).

### <Step of Arranging Coil in Stator Core>

In the second embodiment, as illustrated in FIG. 16, in a state in which the second coil portion 250 is retreated to the outside of the stator core 221 (radially outer side of the stator core 221), the first coil portion 240 is arranged on the radially outer sides of the slots 223 of the stator core 221 by being moved from the radially inner side to the radially outer side of the stator core 221. After that, the third coil portions 260a to 260f are arranged in this order in the slots 223 of the stator core 221.

Thereafter, as illustrated in FIG. 17, the retreated second coil portion 250 is moved by being flipped from the radially outer side to the radially inner side of the stator core 221 (in an arrow B11 direction), and then the second coil portion 250 is arranged on the radially inner sides (opening sides) of the slots 223 of the stator core 221 by being moved from the radially inner side to the radially outer side of the stator core 221 (in an arrow B12 direction).

### (Effects of Manufacturing Method of Second Embodiment)

In the second embodiment, the following effects can be attained.

In the second embodiment, the first coil portion 240 is arranged on the radially outer sides of the slots 223 of the stator core 221 in the state in which the second coil portion 250 is retreated to the outside of the stator core 221 (radially outer side of the stator core 221). After that, the third coil portions 260a to 260f are arranged in this order in the slots 223 of the stator core 221. Thereafter, the retreated second coil portion 250 is arranged in the stator core 221. Thus, also in the second embodiment, the operation of arranging the coil 230 in the slots 223 can be mechanized (automated) easily and the deterioration of the balance of flux linkage can be prevented while the increase in the size of the coil 230 (rotating electrical machine 200) is prevented.

The other effects of the second embodiment are similar to those of the first embodiment described above.

### [Modified Examples]

It should be understood that the embodiments disclosed herein are illustrative but are not limitative in all respects. The scope of the present invention is defined by the claims rather than the description of the embodiments above, and further encompasses meanings of equivalents to the elements in the claims and all modifications (modified examples) within the scope of the claims.

For example, in the first embodiment and the second embodiment described above, description is given of the example in which one first coil portion and one second coil portion each formed of the single-layer lap winding coil are provided. However, the present invention is not limited to this example. For example, a plurality of first coil portions and a plurality of second coil portions may be provided.

In the first embodiment and the second embodiment described above, description is given of the example in which six third coil portions each formed of the double-layer lap winding coil are provided. However, the present invention is not limited to this example. That is, less than six or seven or more third coil portions may be provided.

In the first embodiment and the second embodiment described above, description is given of the example in which each of the first coil portion and the second coil portion includes the inner coil part and the outer coil part and the third coil portion includes the double-layer coil parts arranged on one side and the other side in the circumferential direction (that is, each of the first coil portion, the second coil portion, and the third coil portion is formed of a twin coil having two coil parts in sequence). However, the present invention is not limited to this example. For example, each of the first coil portion, the second coil portion, and the third coil portion may be structured by a coil having one coil part or three or more coil parts in sequence.

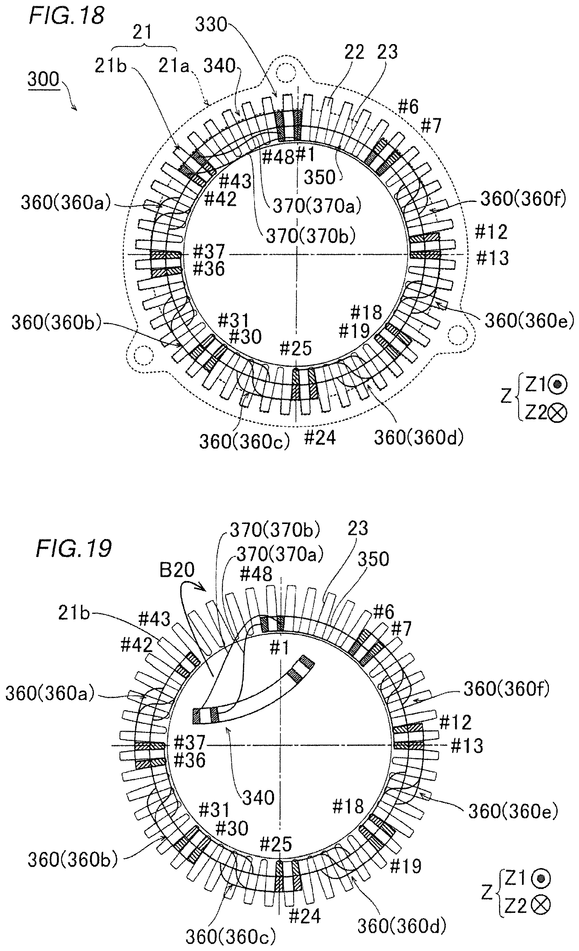

In the first embodiment described above, description is given of the example in which the second coil portion 50 is structured to be arranged on the radially inner side (deep side) of one slot 23 with slot number #1 out of slot numbers #1 and #2 in which the first coil portion 40 is arranged, and the third coil portion 60f is structured to be arranged on the radially outer side (opening side) of one slot 23 with slot number #7 out of slot numbers #6 and #7 in which the second coil portion 50 is arranged. However, the present invention is not limited to this example. For example, as in a modified example of the first embodiment illustrated in FIG. 18 and FIG. 19, a second coil portion 350 may be structured to be arranged on the radially inner sides of both the slots 23 with slot numbers #1 and #48 in which a first coil portion 340 is arranged, and a third coil portion 360f may be structured to be arranged on the radially outer sides of both the slots 23 with slot numbers #6 and #7 in which the second coil portion 350 is arranged.

As illustrated in FIG. 18, a rotating electrical machine 300 according to the modified example of the first embodiment includes the stator core 21 formed of the radially outer core 21a and the radially inner core 21b. The stator core 21 is structured similarly to the stator core 21 of the first embodiment. The rotating electrical machine 300 includes a coil 330 formed of the first coil portion 340, the second coil portion 350, and a third coil portion group 360 (360a to 360f). The first coil portion 340 and the second coil portion 350 are connected together by a first connecting wire portion 370 formed of inter-coil conductor wires 370a and 370b.

In the modified example, the second coil portion 350 is arranged on the radially inner sides (deep sides) of both the slots 23 with slot numbers #1 and #48 in which the first coil portion 340 is arranged. The third coil portion 360a is arranged on the radially inner sides (deep sides) of both the slots 23 with slot numbers #42 and #43 in which the first coil portion 340 is arranged. The third coil portion 360f is arranged on the radially outer sides (opening sides) of both the slots 23 with slot numbers #6 and #7 in which the second coil portion 350 is arranged.

That is, in the modified example, a U-phase coil 330 is arranged on both of the radially inner side and the radially outer side of the slot 23 with slot number #48, and is also arranged on both of the radially inner side and the radially outer side of the slot 223 with slot number #1. A W-phase coil 330 is arranged on both of the radially inner side and the radially outer side of the slot 23 with slot number #2, and is also arranged on both of the radially inner side and the radially outer side of the slot 23 with slot number #3. A V-phase coil 330 is arranged on both of the radially inner side and the radially outer side of the slot 23 with slot number #4, and is also arranged on both of the radially inner side and the radially outer side of the slot 23 with slot number #5. Thus, the coils 330 are wound in the slots 23 with slot numbers #1, #2, #3, #4, #5, #6, #7, ... in the order of U-U (coil wound on radially inner side - coil wound on radially outer side), U-U, W-W, W-W, V-V, V-V, and U-U.

Thus, in the modified example, the efficiency of conversion from electric power to torque can be increased as compared to the first embodiment. In the structure of the first embodiment, generation of noise and vibration at the time of driving can be prevented as compared to the structure of the modified example.

As illustrated in FIG. 19, in a step of arranging the coil 330 in the stator core 21 in the modified example, similarly to the rotating electrical machine 100 of the first embodiment, the second coil portion 350 of the rotating electrical machine 300 that is continuously connected to the first connecting wire portion 370 continuously connected to the first coil portion 340 is first arranged in the stator core 21 from the radially outer side toward the radially inner side in a state in which the first coil portion 340 is retreated to the outside of the stator core 21, namely, the radially inner side of the stator core 21. Subsequently, the third coil portions 360f, 360e, 360d, 360c, 360b, and 360a are attached to the stator core 21 in this order. After that, the first coil portion 340 retreated to the outside of the stator core 21 (radially inner side of the radially inner core 21b) is arranged in the stator core 21 after being moved in an arrow B20 direction.

In the first embodiment and the second embodiment described above, description is given of the example in which the end wires of the first coil portion, the end wires of the second coil portion, and the end wires of the third coil portions are structured to be routed together after the first coil portion, the second coil portion, and the third coil portions are arranged in the slots. However, the present invention is not limited to this example. For example, the first coil portion, the second coil portion, and the third coil portions may be arranged in the slots in a state in which the end wires of the first coil portion, the end wires of the second coil portion, and the end wires of the third coil portions are routed together.

In the first embodiment and the second embodiment described above, description is given of the example in which the first coil portion, the second coil portion, and the third coil portions are arranged in the stator core one by one. However, the present invention is not limited to this example. For example, the first coil portion, the second coil portion, and the third coil portions may be arranged in the stator core simultaneously.

In the first embodiment and the second embodiment described above, description is given of the example in which the stator core is provided with 48 slots. However, the present invention is not limited to this example. In the present invention, the stator core may be provided with any number of slots other than 48.

In the first embodiment and the second embodiment described above, description is given of the example in which the first connecting wire portion is structured to include the inter-coil conductor wire connecting the first inner coil part and the second outer coil part together, and the inter-coil conductor wire continuously connecting the first outer coil part and the second inner coil part together. However, the present invention is not limited to this example. The first connecting wire portion may be structured to include an inter-coil conductor wire connecting the first inner coil part and the second inner coil part together, and an inter-coil conductor wire continuously connecting the first outer coil part and the second outer coil part together.

In the first embodiment and the second embodiment described above, description is given of the example in which the retreated first coil portion or the retreated second coil portion is structured to be flipped when being moved to the radially outer side or the radially inner side of the stator core. However, the present invention is not limited to this example. For example, when the first connecting wire portion is sufficiently long, the retreated first coil portion or the retreated second coil portion may be translated in the axial direction temporarily (moved to the outer side of the stator core in the axial direction) and then moved to the radially outer side or the radially inner side of the stator core.

In the first embodiment and the second embodiment described above, description is given of the example in which the lengths of both of the first coil portion and the second coil portion in the rotational axis direction are set smaller than the bore diameter of the stator core. However, the present invention is not limited to this example. That is, the length of at least one of the first coil portion and the second coil portion in the rotational axis direction may be set smaller than the bore diameter of the stator core.

### Description of the Reference Numerals

11 rotor core
12 permanent magnet
20, 220 stator
21, 221 stator core
23 slots (with slot numbers #1, #2, and #48) (first slots)
23 slots (with slot numbers #42 to #44) (second slots)
23 slots (with slot numbers #6 to #8) (third slots)
30, 230, 330 coil (stator coil)
40, 240, 340 first coil portion
41, 41a to 41d first slot-housed portion
50, 250, 350 second coil portion
51, 51a to 51d second slot-housed portion
60, 260, 360 third coil portion group
60a to 60f, 260a to 260f, 360a to 360f third coil portion
61, 61a to 61d third slot-housed portion
70, 270, 370 first connecting wire portion
70a, 270a, 370a inter-coil conductor wire (one-side first connecting wire portion, first connecting wire portion)
70b, 270b, 370b inter-coil conductor wire (other-side first connecting wire portion, first connecting wire portion)
71a, 71b one-side end
72a, 72b other-side end
100, 200 rotating electrical machine
141, 241 first inner coil part
141a first inner connecting point (first connecting portion)
142, 242 first outer coil part
142c first outer connecting point (second connecting portion)
151, 251 second inner coil part
151 a second inner connecting point (second connecting portion)
152, 252 second outer coil part
152c first outer connecting point (second connecting portion)
161 one-side coil part (double-layer coil part)
162 other-side coil part (double-layer coil part)
163 inter-coil conductor wire (second connecting wire portion)

## Claims

1. A stator coil that is a coil to be arranged in a stator core,
the coil comprising:
a first coil portion formed of a single-layer lap winding coil including a pair of first slot-housed portions to be respectively arranged on a radially outer side of a first slot and on a radially outer side of a second slot;
a second coil portion continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of a third slot different from the first slot and the second slot; and
a third coil portion group including a plurality of third coil portions each formed of a double-layer lap winding coil, wherein
a third slot-housed portion at a one-side end of the third coil portion group in a circumferential direction is arranged on a radially inner side of the second slot, and a third slot-housed portion at an other-side end of the third coil portion group in the circumferential direction is arranged on a radially outer side of the third slot.

2. The stator coil according to claim 1, wherein
the third coil portion has a plurality of double-layer coil parts continuously connected together via a second connecting wire portion, and
a length of the first connecting wire portion is larger than a length of the second connecting wire portion.

3. The stator coil according to claim 1 or 2, wherein
the first coil portion includes a first inner coil part wound on an inner side in the circumferential direction, and a first outer coil part wound on an outer side of the first inner coil part in the circumferential direction,
the second coil portion includes a second inner coil part wound on an inner side in the circumferential direction, and a second outer coil part wound on an outer side of the second inner coil part in the circumferential direction, and
the first connecting wire portion includes a one-side first connecting wire portion continuously connecting the first inner coil part and the second outer coil part together, and an other-side first connecting wire portion continuously connecting the first outer coil part and the second inner coil part together.

4. The stator coil according to any one of claims 1 to 3, wherein a length of at least one of the first coil portion and the second coil portion in a rotational axis direction is smaller than a bore diameter of the stator core.

5. The stator coil according to any one of claims 1 to 4, wherein
the first coil portion includes a first connecting portion continuously connected to the one-side end of the first connecting wire portion,
the second coil portion includes a second connecting portion continuously connected to the other-side end of the first connecting wire portion, and
a length of the first connecting wire portion is larger than a shortest distance between the first connecting portion and the second connecting portion.

6. A method for manufacturing a stator including a stator core having a first slot, a second slot, and a third slot that are different slots, the method comprising:
arranging, in a state in which one of a first coil portion and a second coil portion is retreated to an outside of the stator core, the other of the first coil portion and the second coil portion in the stator core, the first coil portion being formed of a single-layer lap winding coil including a pair of first slot-housed portions to be respectively arranged on a radially outer side of the first slot and on a radially outer side of the second slot of the stator core, the second coil portion being continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of the third slot;
subsequently arranging, on a radially inner side of the second slot, a third slot-housed portion at a one-side end of a third coil portion group in a circumferential direction, the third coil portion group including a plurality of third coil portions each formed of a double-layer lap winding coil, and arranging, on a radially outer side of the third slot, a third slot-housed portion at an other-side end of the third coil portion group in the circumferential direction; and
subsequently arranging, in the stator core, the one of the first coil portion and the second coil portion that is retreated to the outside of the stator core.

7. The method for manufacturing a stator according to claim 6, wherein the arranging the other of the first coil portion and the second coil portion in the stator core includes arranging the other of the first coil portion and the second coil portion in the stator core in a state in which the one of the first coil portion and the second coil portion is retreated to a position where the one of the first coil portion and the second coil portion and the stator core do not overlap each other as seen in a rotational axis direction, and to a radially inner side or a radially outer side of the stator core.

8. The method for manufacturing a stator according to claim 7, wherein the arranging the other of the first coil portion and the second coil portion in the stator core includes arranging the second coil portion on the radially inner side of the first slot and on the radially inner side of the third slot of the stator core in a state in which the first coil portion is retreated to the radially inner side of the stator core, or arranging the first coil portion on the radially outer side of the first slot and on the radially outer side of the second slot of the stator core in a state in which the second coil portion is retreated to the radially outer side of the stator core.

9. The method for manufacturing a stator according to claim 7 or 8, wherein the arranging the one of the first coil portion and the second coil portion in the stator core includes arranging the other of the first coil portion and the second coil portion in the stator core in a state in which the one of the first coil portion and the second coil portion is retreated to the radially inner side of the stator core, and then arranging the one of the first coil portion and the second coil portion in the stator core from the radially outer side of the stator core by moving the one of the first coil portion and the second coil portion from the radially inner side to the radially outer side of the stator core, or arranging the other of the first coil portion and the second coil portion in the stator core in a state in which the one of the first coil portion and the second coil portion is retreated to the radially outer side of the stator core, and then arranging the one of the first coil portion and the second coil portion in the stator core from the radially inner side of the stator core by moving the one of the first coil portion and the second coil portion from the radially outer side to the radially inner side of the stator core.

10. A rotating electrical machine, comprising:
a rotor core provided with a permanent magnet;
a stator core arranged so as to face the rotor core in a radial direction, and having a first slot, a second slot, and a third slot that are different slots; and
a coil arranged in the stator core, wherein
the coil includes:
a first coil portion formed of a single-layer lap winding coil including a pair of first slot-housed portions respectively arranged on a radially outer side of the first slot and on a radially outer side of the second slot;
a second coil portion continuously connected to an other-side end of a first connecting wire portion having a one-side end continuously connected to the first coil portion, and formed of a single-layer lap winding coil including a pair of second slot-housed portions, one of which is arranged on a radially inner side of the first slot and the other of which is arranged on a radially inner side of the third slot; and
a third coil portion group including a plurality of third coil portions each formed of a double-layer lap winding coil, and
a third slot-housed portion at a one-side end of the third coil portion group in a circumferential direction is arranged on a radially inner side of the second slot, and a third slot-housed portion at an other-side end of the third coil portion group in the circumferential direction is arranged on a radially outer side of the third slot.
